# EUROPEAN PATENT APPLICATION

(11) **EP 1 039 323 A1**
(43) Date of publication of application: **27.09.2000**
(21) Application number: 99105055.0
(22) Date of filing: 23.03.1999
(51) Int. Cl.: G02B 6/38

(54) **Ferrule for optical fibres**

(71) Applicant: W.L. GORE & ASSOCIATES GmbH, 85640 Putzbrunn (DE)
(72) Inventor: Schricker, Ulrich, 91154 Roth (DE)
(74) Representative: Harrison, Robert John

(57) **Abstract**

Disclosed is a connector plug (10) and an optical fibre connection system employing the connector plugs (10). Each connector plug (10) comprises a plurality of optical fibres (20) arranged transversely in a plurality of corresponding fibre optic alignment cavities (35) within a connector plug member (30) and each having a fibre endface (22). The connector plug member (30) has a front facet (40), a top side (50), a bottom side (60), one or more guide pin insertion holes (80) and a rear end (70). The fibre endfaces (22) of the optical fibres (20) are located at a distance L from the front facet (40), preferably between 0µm and 4µm, within the fibre optic alignment cavity (35).

## Description

### Field of the Invention

The invention relates to a ferrule for a connection system having a plurality of optical fibres.

### Prior Art

A multi-fibre optical fibre connector plug is known from European Patent Application EP-A-0 514 722 (NT&T). The ferrule shown in this prior art has a plurality of optical fibres whose endfaces extend beyond a front facet of the ferrule. When two of the said ferrules are placed in contact with each other the endfaces of the optical fibres come into contact with each other such that light waves passing along one optical fibre in one ferrule is transmitted to the corresponding optical fibre in the other ferrule.

A further optical fibre connector plug is shown in US-A-4 973 127 (Cannon et al) assigned to AT&T Bell Laboratories. The ferrules used in the connector plug of this disclosure include a plurality of small fibre grooves for accepting the optical fibres and larger pin grooves for accepting guide pins to join two ferrules together. Furthermore each ferrule includes a nose projecting beyond the front facet of the ferrule for facilitating the connection of the optical fibres to each other.

Other optical fibre connectors are known from US-A-3 864 018 (Miller), US-A-4 029 390 (Chinnock et al), US-A-4 279 468 (Turley et al.), US-A-4 657 341 (Sammueller), US-A-4 818 058 (Bonanni), US-A-4 830 456 (Kakii et al.), US-A-3 836 638 (Finzel), US-A-4 865 413 (Hübner et al.), US-A-4 898 449 (Vroomen et al.).

The use of silicon spacer chips for an optical fibre cable connector is disclosed in an article by C.M. Schroeder entitled "Accurate Silicon Spacer Chips for an Optical-Fibre Cable Connector" published in the Bell System Technical Journal, vol. 57, No. 1, January 1978, pp 91-97, and in an article entitled "Low-Loss Multi-fibre Connectors with Plug-Guide Grooved Silicon" by Satake et al. published in Electronics Letters, Oct. 29, 1981, vol. 17, No. 22, pp 828-830.

The use of transfer moulding techniques for the manufacture of splices for optical fibres is acknowledged in the letter entitled "Precisely Moulded Plastic Splices for Optical Fibres" by Kurokawa et al published in Electronics Letters, Nov. 20, 1980, pp 911-912, and in the article entitled "Low-Loss Plastic Moulded Optical Multi-fibre Connector for Ribbon-to Single Fibre Fan-Out" by Satake et al. published in the Journal of Lightwave Technology, vol. LT-3, No. 6, December 1985, pp 1339-1342.

### Summary of the Invention

It is an object of this invention to provide an improved ferrule for a multi-fibre optical fibre connector plug.

It is furthermore an object of the invention to protect the ends of the optical fibres from mechanical damage in a optical fibre connector plug.

These and other objects of the invention can be solved by providing a connector plug comprising a plurality of optical fibres arranged transversely in a plurality of corresponding fibre optic alignment cavities within a ferrule. The ferrule has a front facet, a top side, a bottom side, one or more guide pin insertion holes and a rear end. The endfaces of the optical fibres are located at a distance within the fibre optic alignment cavity and the optical fibres emerge at the rear end of said ferrule. Since the endfaces of the optical fibres are located at a distance within the connector plug member and do not protrude from the end of the connector plug member they are protected from damage. The distance is between 0µm und 4µm and prefereably between 0µm und 2µm.

In one embodiment of the invention, the front facet of the ferrule is inclined at least partly at an angle to the axis formed by the one or more optical fibres. This is particularly advantageous when the ferrule is used in a system with single-mode optical fibres since any stray reflections at the connection of the optical fibres will not be reflected back into the optical fibre and/or laser source. Experiments have shown that the best range is between 75° and 85°.

The material used for making the ferrule are preferably selected from the group of polymer materials comprising liquid crystalline polymer (LCP), poly(butylene terephthalate) (PBT), polyoxymethylene (POM), poly(phenylene ether) (PPE), poly(phenylene sulfide) (PPS), poly(ether sulfone) (PES), poly(ether imide) (PEI), poly(ether ether ketone) (PEEK) or polyimide or blends and modifications thereof. These materials have a sufficient degree of compressibility that the ferrule in the optical fibre connection system can be compressed sufficiently such that the endfaces of the optical fibres within the ferrule come into intimate contact with each other. Most preferably the ferrule is made from liquid crystalline polymer or polyetherimide. It is thought that ferrules made from these materials offer the best performance.

The invention furthermore provides an optical fibre connection system comprising a first connector plug and a second connector plug. Each connector plug comprises a plurality of optical fibres arranged transversely in a plurality of corresponding fibre optic alignment cavities within a ferrule. The ferrule has a front facet, a top side, a bottom side, one or more guide pin insertion holes, and a rear end from which said plurality of optical fibres emerge. In the connection system of the invention the front facets of each ferrule abut each other and the endfaces of the corresponding plurality of optical fibres are in contact with each other. One or more guide pins are inserted into the guide pin insertion holes to align the first connector plug with the second connector plug .

### Description of the Drawings

- Fig. 1 s: hows a perspective view of a ferrule for optical fibres according to the invention
- Fig. 1b: shows a side view of the ferrule for optical fibres according to the invention
- Fig. 2a: shows a perspective view of the front face of the ferrule for another embodiment of the invention
- Fig. 2b: shows a side view of the ferrule for the other embodiment of the invention
- Fig. 2c: shows a perspective view of the front face of the ferrule for a further embodiment of the invention
- Fig. 2d: shows a perspective view of the front face of the ferrule for a further embodiment of the invention
- Fig. 3: shows a side view of an optical fibre connection system with a first ferrule and a second ferrule.
- Fig. 4: shows a side view of the optical fibre connection system with the endfaces of the optical fibres in contact with each other.
- Figs. 5a-c: illustrate the injection moulding process by which the ferrule of the invention is manufactured.
- Figs. 6a-b: show the optical fibre connector set in which the ferrule of the invention may be used.

### Detailed Description of the Invention

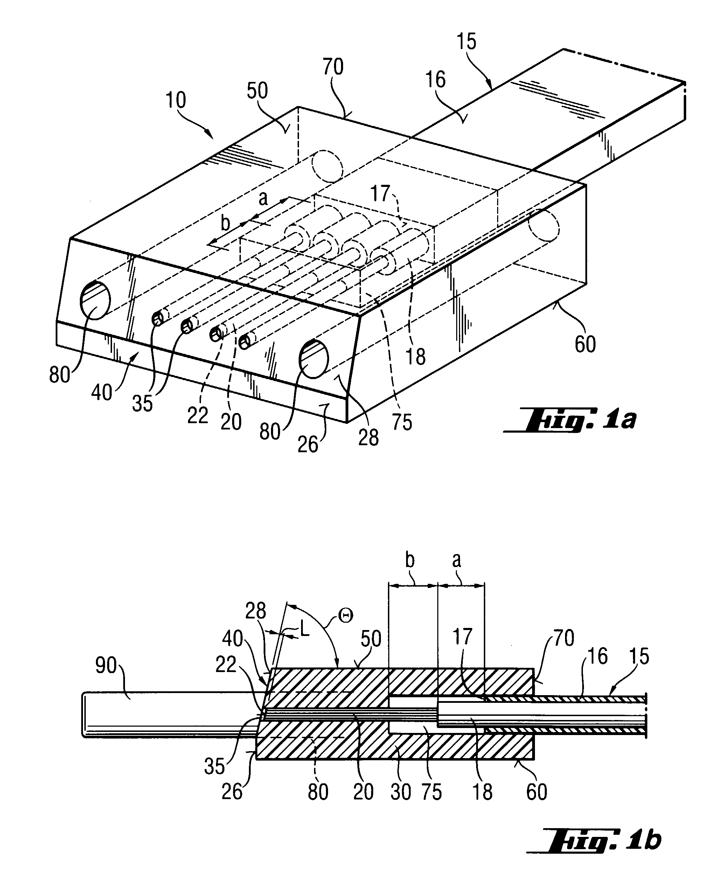

Figs. 1a and 1b show a perspective view and a side view respectively of a ferrule 10 and a fibre optic cable 15 connected thereto. The ferrule 10 contains a plurality of optical fibres 20 extending beyond one end of the fibre optic cable 15 and being transversely arranged in fibre optic grooves 35 within a ferrule member 30. The ferrule member 30 has a front facet 40, a top side 50, a bottom side 60 and a rear end 70. The ferrule member 30 includes further a recess 75 extending from the rear end 70 to accept the fibre optic cable 15. The fibre optic cable 15 is in the depicted embodiment of the invention enclosed by the ferrule member 30 at its one end 17 and emerges from the ferrule member 30 at its rear end 70. The fibre optic cable 15 of the embodiment is in the form of a ribbon cable and has an outer jacket 16. The optical fibres 20 within the fibre optic cable 15 comprise a core and a cladding (not shown). The cladding is surrounded by a coating 18. Within the ferrule member 30 the outer jacket 16 is stripped away over a certain distance a within the recess 75 to reveal the coating 18. The coating 18 is stripped from the optical fibres 20 within the recess 75 over a certain distance b.

The ferrule member 30 in depicted as being formed as a single piece. The ferrule member 30 could be also formed from two pieces adhered or clamped together. The optical fibres 20 extending beyond the one end 17 of the fibre optic cable 15 are also enclosed by the ferrule member 30 within the fibre optic grooves 35. The fibre optic grooves 35 extend from the one end of the fibre optic cable 15 to the front facet 40 of the connector plug member 30.The fibre optic grooves 35 in Fig. 1 are shown as being cylindrical in shape. They may also be double V-shaped or take other forms. Each optical fibre 20 has an endface 22 and extends from the one end 17 of the fibre optic cable 15 to a distance L from the bottom edge of the fibre optic groove 35 in the front facet 40. The distance L is between 0µm and 2µm.

The front facet 40 of the ferrule 10 has a first part 26 and a second part 28. As depicted the planar surface of the first part 26 of the front facet 40 is perpendicular to the plane in which the plurality of optical fibres 20 are situated. The planar surface of the second part 28 is oriented at an angle θ to the plane in which the plurality of optical fibres 20 are situated.

The ferrule member 30 furthermore has guide pin insertion holes 80 through the body. The axis of the guide pin insertion holes 80 is in the same plane as the optical fibres 20 or in a plane parallel to this plane. The guide pin insertion holes 80 serve to accept a guide pin 90 as shown on the left hand side of Fig. 1b which extends beyond the edge of the front facet 40 and serves to align two connector plugs 10 together.

Three further embodiments of the front facet 40 of the ferrule 10 are shown in Figs. 2a to 2d. In each of these embodiments the part of the front facet 40 in which the fibre optic grooves 35 are arranged projects beyond the part of the front facet 40 in which the guide pin insertion holes 80 are positioned.

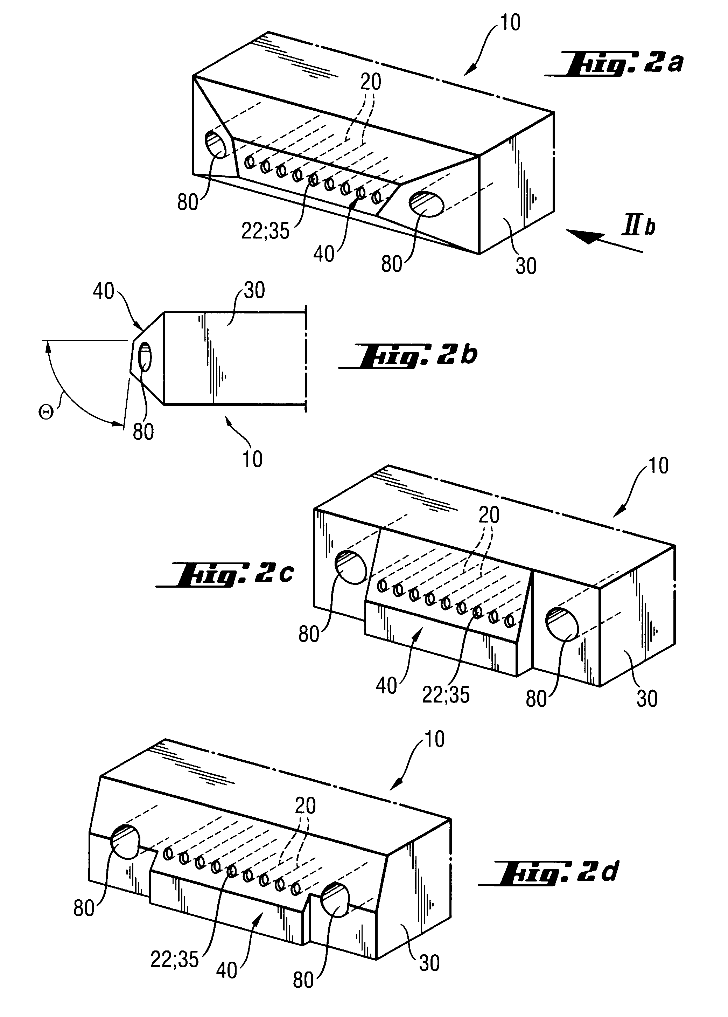

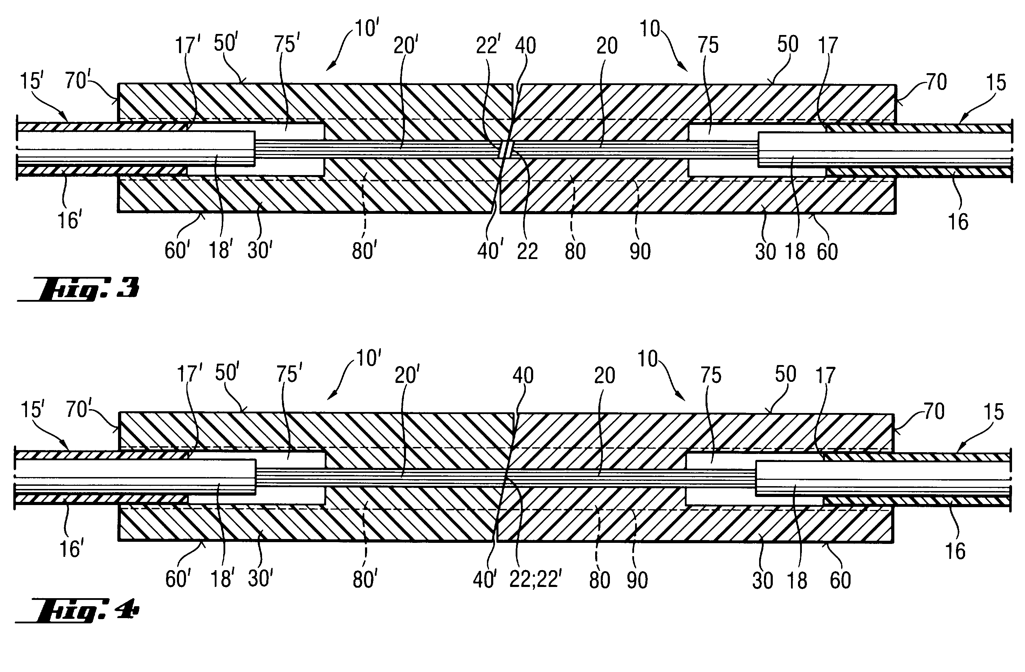

Fig. 3 shows a first ferrule 10 connected to a second ferrule 10'. The elements depicted in Fig. 3 are given the same reference numerals as in Figs. 1 and 2 except that the elements of the second ferrule 10' are distinguished by the addition of a'. It will be observed from Fig. 3 that on connection of the first ferrule plug 10 to the second ferrule 10' at least part of the front facets 40 and 40' abut each other and are in immediate contact with each other. One or two guide pins 90, 90' are inserted in the guide pin insertion holes 80 and 80' respectively and serves to hold the two ferrules 10 and 10' in alignment with each other.

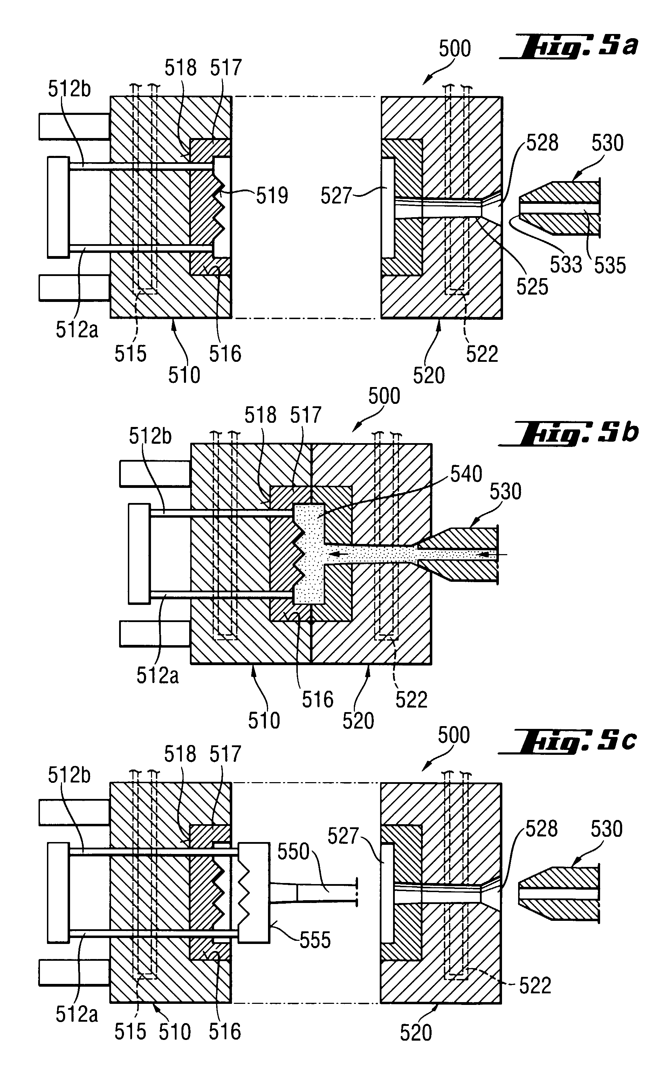

The ferrules 10 and 10' are made from polymer materials such as a liquid crystalline polymer (LCP), for example LCP Vectra A 625, Vectra A 530 or LCP Vectra C 950, poly(butylene terephthalate) (PBT), such as Celanex 2000-3, polyoxymethylene (POM), such as Ultraform Z 23200003, poly(phenylene ether) (PPE), such as Luranyl Kr 2451/1, polyphenylsulfide (PPS), such as Ryton BR 102 or Ryton EXP 144, poly(ether sulfone) (PES), such as Ultrason KR 4110, poly(ether imide) (PEI), such as Ultem CRS 5001 or Ultem 1010 R, poly(ether ether ketone) (PEEK), such as Victrex 151G, or polyimide (PI), such as Aurum PL 450 C. These materials have a sufficiently high degree of compressibility such that when a force is applied to the rear ends 70 and 70' of the connector plugs 10 and 10' the front facets 40 and 40' of the connector plugs 10 and 10' are compressed sufficiently such that endfaces 22 of each optical fibre 20 in the first connector plug 10 is in direct contact with the endfaces 22' of the corresponding endface 22' of each optical fibre 20' in the second connector plug 10'. This is illustrated in Fig. 4. Table I shows the Young's Moduli for compressive forces for some of the above polymers.

**Table I**

| Polymer | Name | Young's Modulus (MPa) |
|---|---|---|
| | | |
| liquid crystalline polymer (LCP) | LCP Vectra A 625 | 10 300 |
| liquid crystalline polymer (LCP) | LCP Vectra C 950 | 8 000 |
| liquid crystalline polymer (LCP) | LCP Vectra A 530 | 12 800 |
| polyoxymethylene (POM), | Ultraform Z 23200003 | 2 900 |
| poly(phenylene ether) (PPE) | Luranyl Kr 2451/1 | 2 500 |
| poly(ether sulfone) (PES) | Ultrason KR 4110 | 3 600 |
| poly(ether imide) (PEI) | Ultem CRS 5001 | 3 200 |
| poly(ether imide) (PEI) | Ultem 1010 R | 2 900 |
| poly(ether ether ketone) (PEEK), | Victrex 151 G | 3 600 |

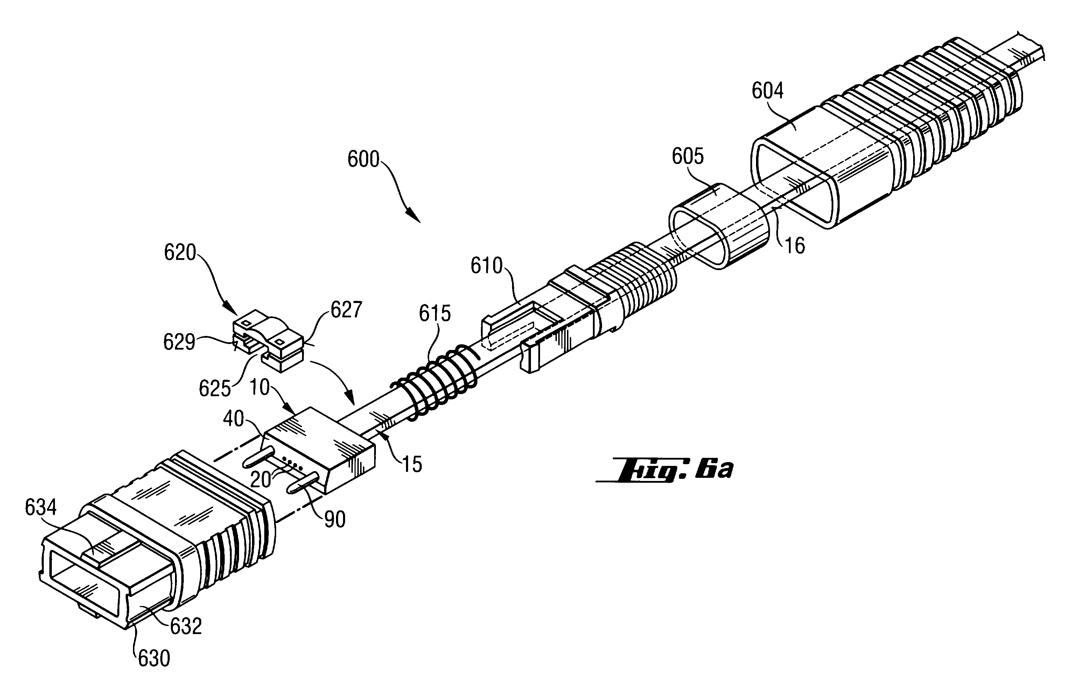

The ferrule member 30 is made in two halves using an injection moulding method as is shown in Figs. 5a to Fig. 5c. This comprises a mould 500 with an ejector side 510 and an injection side 520. The ejector side 510 has ejector pins 512a and 512b which are inserted through the ejector side 510 to a mould insert cavity 516 which accepts a first mould insert 517 having a back side 518 and a front side 519. The ejector side 510 furthermore contains heating elements 515. The ejector side 520 has heating elements 522 and a passageway 525 through the injection side 520 leading to a second mould insert 527. An opening 528 to the passageway 525 accepts an end 533 of a barrel 530 for injecting the plastic into the mould 500. The barrel 530 has a passageway 535 through which molten plastic is injected through the end 533, into the mould 500 and consequently pressed into the mould insert cavity 516.

Fig. 5a shows the mould 500 prior to commencement of the injection moulding process. The mould insert 517 for the top or bottom half of the connector 10 is inserted into the mould insert cavity 516. The ejector pins 512a, 512b are so positioned that they pass through the back side 518 of the mould insert 517 to the front side 519 of the mould insert 517. Their function will become clearer later. The ejector side 510 and the injection side 520 are brought together as shown in Fig. 5b and the end 533 of the barrel 530 is placed in the opening 528 of the passageway 525. As is depicted by the arrows in the diagram, molten plastic is injected through the passageway 535 of the barrel 530 into the passageway 525 of the injection side 520 and thus pressed into the cavity 540 formed between the first mould insert 517 and the second mould insert 527. Ventilation channels which are not shown on these figures allow escape of the air from the cavity 540 during the moulding process. The ejector side 510 and the injection side 520 are heated during the moulding process by means of the heating elements 515 and 522 respectively. The end 533 of the barrel 530 is subsequently withdrawn from opening 528 of the passageway 525.

After cooling and solidifying of the plastic within the cavity, the ejector side 510 and the injection side 520 are separated from each other as shown in Fig. 5c. The connector half thus moulded is removed from the mould insert cavity 516 by means of the ejector pins 512a, 512b and then removed from the ejector pins 512a, 512b. The stub 550 attached to the bottom 555 of the ferrule member half is removed. Using the same mould inserts 517, 527 the matching top and bottom halves of a connector plug member 30 can be constructed.

The connector plug member 30 assembled by placing the plurality of optical fibres 20 in the fibre optic grooves 35 in the first half of ferrule member 30. The other half of the ferrule member 30 is then positioned on the first half of the ferrule member 30 and the two halves of the ferrule member 30 attached together by an adhesive.

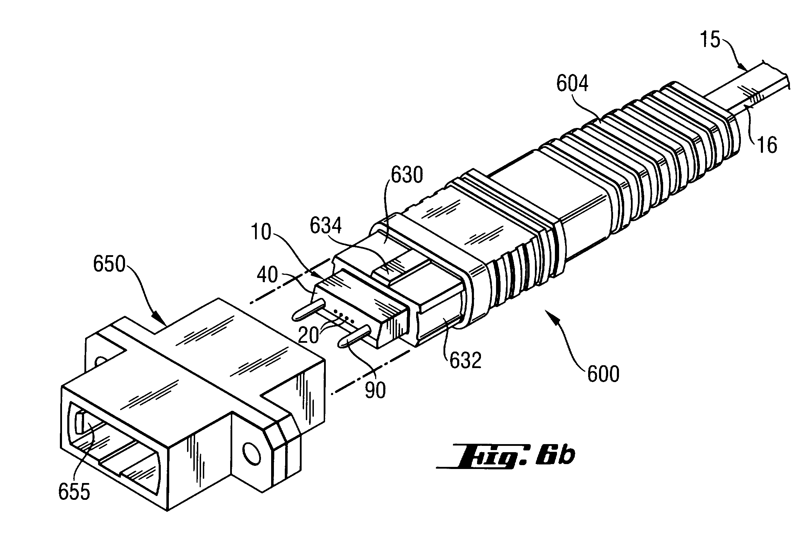

The ferrule 30 of the invention is used, for example, in a connection system 600 such as shown diagramatically in Figs. 6a and 6b and which is obtainable from US Conec, Hickory, North Carolina, US, under the name MTP Push-on connector. Fig. 6 shows only one half of the connection system 600. An adapter 650 is used to connect two halves of the connection system 600 together. Each half of the connection system 600 comprises an end piece 604, a crimp ring 605, a spring push 610, a spring 615, a pin clamp 620, a coupling element 630. The pin clamp 620 has a rear end 627 and a front end 629 as well as an opening 625 through which the fibre optic cable 15 passes. The ferrule 10 is placed in front of the pin clamp 620 such that the fibre optic cable 15 extends from the rear end 627, i.e. the end facing the spring push 610. The ferrule 10 is surrounded and guided by the coupling element 630 and the front facet 40 emerges from the front end of the coupling element 630. The spring 615, the spring push 610 are slid over the fibre optic cable 15 and the cable jacket and a strength member are clamped in place by means of the crimp ring 605. The end piece 604 and the coupling element 630 are then assembled over the construction. The coupling element 630 includes a key 634 for ensuring that the one half of the connection system 600 is inserted correctly in the adapter 650. The coupling element 630 further includes a depression 632 which co-operates with a latch 655 on the adapted to hold the half of the connection system in the adapter 650

Fig. 6b shows one half of the connection system 600 mounted together with the adapter 650. The ferrules 10 in both halves of the connection system 600 are mounted such that when the halves of the connection system 600 are held in the adapter 650 the respective front facets 40 of the ferrule 10 abut each other. The spring 615 applies sufficient force to the pin clamp 620 holding the ferrule 10 that the ferrule is compressed and front faces of the optical fibres are in direct contact with each other as explained with reference to Fig. 4.

The ferrule 30 of the invention can also be used to couple an optical element such as a semiconductor laser or photodiode to a connection system 600. In this latter case no fibre optic cable 15 emerges from the rear end 70 of the ferrule 30.

Although a few exemplary embodiments of the present invention have been described in detail above, those skilled in the art readily appreciate that many modifications are possible without materially departing from the novel teachings and advantages which are described herein. Accordingly, all such modifications are intended to be included within the scope of the present invention, as defined by the following claims.

## Claims

1. Connector plug (10) comprising
a plurality of optical fibres (20) arranged transversely in a plurality of corresponding fibre optic alignment cavities (35) within a connector plug member (30) and each having a fibre endface (22);
the connector plug member (30) having
a front facet (40),
a top side (50),
a bottom side (60),
one or more guide pin insertion holes (80)
and a rear end (70);
wherein the fibre endfaces (22) of said plurality of optical fibres (20) are located at a distance L from the front facet 40 of the fibre optic alignment cavity (35)

2. Connector plug 10 according to claim 1 wherein the distance L is between 0µm and 4µm.

3. Connector plug (10) according to claim 1 wherein the front facet (40) is inclined at least partly at an angle θ to an axis parallel to the one or more optical fibres (20).

4. Connector plug (10) according to claim 2 wherein said angle θ is between 75 ° and 85°.

5. Connector plug (10) according to claim 1 wherein said connector plug member (30) is made from a polymer material selected from the group of polymer materials comprising liquid crystalline polymer (LCP), poly(butylene terephthalate) (PBT), polyoxymethylene (POM), poly(phenylene ether) (PPE), poly(phenylene sulfide) (PPS), poly(ether sulfone) (PES), poly(ether imide) (PEI), poly(ether ether ketone) (PEEK) or polyimide (PI) or blends or modifications thereof.

6. Connector plug (10) according to claim 5 wherein the connector plug member (30) is made from liquid crystalline polymer.

7. Connector plug (10) according to claim 5 wherein the connector plug member (30) is made from poly (ether imide).

8. Connector plug (10) according to claim 1 wherein said plurality of optical fibres (20) emerge at the rear end (70) of said connector plug member (30) and are bundled together within a fibre optic cable jacket (25) to form a fibre optic cable (15).

9. Connector plug (10) according to claim 1 wherein said plurality of optical fibres (20) emerge from the rear end of said connector plug member (30) within said fibre optic cable jacket (25).

10. Connector plug (10) according to claim 1 further comprising at least one guide pin (90) inserted within the guide pin insertion hole (80) for aligning the connector plug (10) with a further connector plug (10).

11. An optical fibre connection system comprising a first connector plug (10) and a second connector plug (10'), each connector plug (10, 10') comprising:
a plurality of optical fibres (20, 20') arranged transversely in a plurality of corresponding fibre optic alignment cavities (24, 24') within a connector plug member (30, 30') and each having an endface (22, 22');
the connector plug member (30, 30') having
a front facet (40, 40'),
a top side (50, 50'),
a bottom side (60, 60'),
one or more guide pin insertion holes (80, 80')
and a rear end (70, 70') from which said plurality of optical fibres (20, 20') emerge;
wherein the front facets (40, 40') of each connector plug member (30, 30') abut each other,
the endfaces (22, 22') of the corresponding plurality of optical fibres (20, 20') are in contact with each other, at least one of the endfaces (22, 22') is located at a distance L within one of the fibre optical alignment cavities (35, 35') when the front facets (40, 40') are unabutted,
and one or more guide pins (90) are inserted within the guide pin insertion holes (80, 80') to align the first connector plug (10) with the second connector plug (10').

12. An optical fibre connection system according to claim 11 wherein the distance L is between 0µm und 4µm.

13. Optical fibre connection system according to claim 11 wherein the front facet (40, 40') is inclined at least partly at an angle θ to the axis formed by the one or more optical fibres 20, 20').

14. Optical fibre connection system according to claim 13 wherein said angle θ is between 75 ° and 85 °.

15. An optical fibre connection system according to claim 11 wherein at least one of said connector plug members (30, 30') are made from a plastic material selected from the group of plastic materials comprising liquid crystalline polymer (LCP), poly(butylene terephthalate) (PBT), polyoxymethylene (POM), poly(phenylene ether) (PPE), poly(phenylene sulfide) (PPS), poly(ether sulfone) (PES), poly(ether imide) (PEI), poly(ether ether ketone) (PEEK) or polyimide(PI) or blends or modifications thereof.

16. Optical fibre connection system according to claim 15 wherein at least one of the connector plug members (30, 30') is made from liquid crystalline polymer.

17. Optical fibre connection system according to claim 13 wherein at least one of the connector plug members (30, 30') is made from poly (ether imide).

18. An optical fibre connection system according to claim 11 wherein said plurality of optical fibres (20, 20') are bundled together within a fibre optic cable jacket (25, 25') to form a fibre optic cable (15, 15').

19. An optical fibre connection system according to claim 11 wherein said plurality of optical fibres (20) emerge from the rear end of said connector plug members (30, 30') within fibre optic cable jackets (25, 25').

## Amended claims

### Amended claims in accordance with Rule 86(2) EPC.

1. Connector plug (10) comprising
a plurality of optical fibres (20) arranged transversely in a plurality of corresponding fibre optic alignment cavities (35) within a connector plug member (30) made of a plastic material having a Young's Modulus of less than 12800 MPa and each having a fibre endface (22);
the connector plug member (30) having
a front facet (40),
a top side (50),
a bottom side (60),
one or more guide pin insertion holes (80)
and a rear end (70);
wherein the fibre endfaces (22) of said plurality of optical fibres (20) are located at a distance L from the front facet 40 of the fibre optic alignment cavity (35)

2. Connector plug 10 according to claim 1 wherein the distance L is between 0µm and 4µm.

3. Connector plug (10) according to claim 1 wherein the front facet (40) is inclined at least partly at an angle θ to an axis parallel to the one or more optical fibres (20).

4. Connector plug (10) according to claim 2 wherein said angle θ is between 75 ° and 85°.

5. Connector plug (10) according to claim 1 wherein said connector plug member (30) is made from a polymer material selected from the group of polymer materials comprising liquid crystalline polymer (LCP), poly(butylene terephthalate) (PBT), polyoxymethylene (POM), poly(phenylene ether) (PPE), poly(phenylene sulfide) (PPS), poly(ether sulfone) (PES), poly(ether imide) (PEI), poly(ether ether ketone) (PEEK) or polyimide (PI) or blends or modifications thereof.

6. Connector plug (10) according to claim 5 wherein the connector plug member (30) is made from liquid crystalline polymer.

7. Connector plug (10) according to claim 5 wherein the connector plug member (30) is made from poly (ether imide).

8. Connector plug (10) according to claim 1 wherein said plurality of optical fibres (20) emerge at the rear end (70) of said connector plug member (30) and are bundled together within a fibre optic cable jacket (25) to form a fibre optic cable (15).

9. Connector plug (10) according to claim 1 wherein said plurality of optical fibres (20) emerge from the rear end of said connector plug member (30) within said fibre optic cable jacket (25).

10. Connector plug (10) according to claim 1 further comprising at least one guide pin (90) inserted within the guide pin insertion hole (80) for aligning the connector plug (10) with a further connector plug (10).

11. An optical fibre connection system comprising a first connector plug (10) and a second connector plug (10'), each connector plug (10, 10') comprising:
a plurality of optical fibres (20, 20') arranged transversely in a plurality of corresponding fibre optic alignment cavities (24, 24') within a connector plug member (30, 30') made of a plastic material having a Young's Modulus of less than 12800 MPa and each having an endface (22, 22');
the connector plug member (30, 30') having
a front facet (40, 40'),
a top side (50, 50'),
a bottom side (60, 60'),
one or more guide pin insertion holes (80, 80')
and a rear end (70, 70') from which said plurality of optical fibres (20, 20') emerge;
wherein the front facets (40, 40') of each connector plug member (30, 30') abut each other,
the endfaces (22, 22') of the corresponding plurality of optical fibres (20, 20') are in contact with each other, at least one of the endfaces (22, 22') is located at a distance L within one of the fibre optical alignment cavities (35, 35') when the front facets (40, 40') are unabutted,
and one or more guide pins (90) are inserted within the guide pin insertion holes (80, 80') to align the first connector plug (10) with the second connector plug (10').

12. An optical fibre connection system according to claim 11 wherein the distance L is between 0µm und 4µm.

13. Optical fibre connection system according to claim 11 wherein the front facet (40, 40') is inclined at least partly at an angle θ to the axis formed by the one or more optical fibres 20, 20').

14. Optical fibre connection system according to claim 13 wherein said angle θ is between 75 ° and 85 °.

15. An optical fibre connection system according to claim 11 wherein at least one of said connector plug members (30, 30') are made from a plastic material selected from the group of plastic materials comprising liquid crystalline polymer (LCP), poly(butylene terephthalate) (PBT), polyoxymethylene (POM), poly(phenylene ether) (PPE), poly(phenylene sulfide) (PPS), poly(ether sulfone) (PES), poly(ether imide) (PEI), poly(ether ether ketone) (PEEK) or polyimide(PI) or blends or modifications thereof.

16. Optical fibre connection system according to claim 15 wherein at least one of the connector plug members (30, 30') is made from liquid crystalline polymer.

17. Optical fibre connection system according to claim 13 wherein at least one of the connector plug members (30, 30') is made from poly (ether imide).

18. An optical fibre connection system according to claim 11 wherein said plurality of optical fibres (20, 20') are bundled together within a fibre optic cable jacket (25, 25') to form a fibre optic cable (15, 15').

19. An optical fibre connection system according to claim 11 wherein said plurality of optical fibres (20) emerge from the rear end of said connector plug members (30, 30') within fibre optic cable jackets (25, 25').
